# EUROPÄISCHE PATENTANMELDUNG

(11) **EP 2 187 137 A2**
(43) Veröffentlichungstag der Anmeldung: **19.05.2010**
(21) Anmeldenummer: 09174181.9
(22) Anmeldetag: 27.10.2009
(51) Int. Cl.: F24D 12/02, F24H 9/06

(54) **Nachrüstbausatz für einen Heizkessel zur Gebäudeheizung**

(30) Priorität: 17.11.2008 DE 202008015206 U
(71) Anmelder: Vincador Holding GmbH, 20354 Hamburg (DE)
(72) Erfinder: Hoffmann, Raphael, 22607 Hamburg (DE); Mansfeld, Frank, 33659 Bielefeld (DE); Kandler, Andreas, 21502 Geesthacht (DE); Sinzenich, Andreas, 33803 Steinhagen (DE)
(74) Vertreter: Eisenführ, Speiser & Partner

(57) **Zusammenfassung**

Die Erfindung betrifft einen Nachrüstbausatz für einen Heizkessel zur Gebäude-und/oder Brauchwasserheizung, umfassend einen Gas-Wasser-Wärmetauscher, einen Anschlussstutzen zum Anschließen des Gas-Wasser-Wärmetauschers an einen Heizkesselabgasausgang und einen Abgasstutzen zum Anschließen des Wärmetauschers an eine Abgasleitung. Erfindungsgemäß ist vorgesehen, dass der Abgasstutzen ein Gebläse aufweist.

## Beschreibung

Die Erfindung betrifft einen Nachrüstbausatz für einen Heizkessel zur Gebäude- und/oder Brauchwasserheizung, umfassend einen Gas-Wasser-Wärmetauscher, einen Anschlussstutzen zum Anschließen des Gas-Wasser-Wärmetauschers an einen Heizkesselabgasausgang und einen Abgasstutzen zum Anschließen des Wärmetauschers an eine Abgasleitung.

Die Erfindung betrifft weiterhin ein Verfahren zur Steigerung der Energieeffizienz eines Heizkessels zur Gebäude- und/oder Brauchwasserheizung, umfassend die Schritte: Anschließen eines Wärmetauschers an einen Heizkesselabgasausgang und Anschließen des Wärmetauschers über einen Abgasstutzen an eine Abgasleitung.

Grundsätzlich betrifft die Erfindung einen Nachrüstbausatz, der sich für alle Arten von Heizkesselbauweisen eignet und insbesondere sowohl für Heizkessel geeignet ist, die nur zur Erwärmung von Heizwasser, die nur zur Erwärmung von Brauchwasser oder die zur Erwärmung von sowohl Heiz- als auch Brauchwasser ausgebildet sind. Im Folgenden soll unter einem Heizkessel zur Gebäudeheizung ein Heizkessel verstanden werden, der für eine dieser drei Nutzungsarten geeignet ist.

Nachrüstbausätze für Heizkessel zur Gebäudeheizung dienen dazu, die Energieeffizienz von Heizkesseln insbesondere vor dem Hintergrund gestiegener Rohstoffpreise zu steigern. Ein Heizkessel umfasst üblicherweise einen Brenner, der mit einer Heizkesselsteuerung verbunden ist, und einen innerhalb des Heizkessels angeordneten Wärmetauscher, um durch den Brenner erzeugte Wärme auf eine Flüssigkeit zu übertragen.

Ein Nachrüstbausatz der eingangs genannten Art weist einen Wärmetauscher auf, der einem Heizkessel nachgeschaltet wird, und daher auch als Nachschaltwärmetauscher bezeichnet werden kann. Dieser Wärmetauscher dient zum Herunterkühlen und gegebenenfalls Kondensieren von Abgasen eines Brenners eines Heizkessels unter Erwärmen einer Flüssigkeit. Durch Nutzung der so entstehenden Kondensationswärme tritt eine signifikante Verbesserung des verbrennungstechnischen Wirkungsgrads des Heizkessels ein.

Eine Kombination aus einem Heizkessel mit Brenner und Heizkesselsteuerung, einem Wärmetauscher zur Übertragung der durch den Brenner erzeugten Wärme auf Heizwasser mit entsprechenden Anschlüssen an einen Heizkreislauf, stellt ein Heizsystem dar, welches auf Verbrennungsparameter, Abgasvorschriften und den Heizbedarf eines Gebäudes abgestimmt ist.

Nachschaltwärmetauscher sind beispielsweise aus der Offenlegungsschrift DE 10 2006 044 201 A1 und der europäischen Patentanmeldung EP 08 151 043.0 bekannt.

Der Nachschaltwärmetauscher der EP 08 151 043.0 weist einen Anschlussstutzen auf, der mit dem Abgasausgang des Heizkessels verbunden ist, sowie einen Abgasstutzen, der an eine Abgasleitung beispielsweise in einem Kamin angeschlossen werden kann, um die durch den Wärmetauscher heruntergekühlten Abgase in die Umgebung abzuleiten. Die Abgase des Heizkessels umströmen innerhalb des Wärmetauschers angeordnete, von Wasser durchströmte Rohre. Der Wärmetauscher weist dazu Anschlüsse für Wasserzufuhr und -abfuhr auf, durch die Wasser in Rohren durch den vom heißen Abgas durchströmten Teil des Wärmetauschers geführt wird.

Aus EP 0643274B1 ist eine Brennwertkesselanlage bekannt, welche sich dadurch auszeichnet, dass die Abgasleitung unmittelbar in Form eines Röhrenwärmetauscher als Bodenheizung oder als Wandheizung ausgebildet ist. Der Schornstein ist als Außenschornstein ausgebildet und trägt auf seinem freien Ende einen Saugventilator. Der Saugventilator wird über einen Temperaturfühler gesteuert, um eine Anpassung an die wärmetechnische Situation der gesamten Anlage zu erzielen. Zwar kann mit einer solchen Brennwertkesselanlage die Effizienz gegenüber konventionellen Brennwertkesselanlagen gesteigert werden. Jedoch eignet sich eine solche Ausführungsart nicht zur Nachrüstung bestehender Brennwert- oder Naturzugkesselanlagen. Der Grund hierfür liegt einerseits in den zu umfangreichen, für den Einbau erforderlichen Maßnahmen. Darüberhinaus wird der für Naturzugkessel erforderliche Sog am Abgasstutzen bei einer solchen Anordnung nicht sichergestellt, so dass eine Zulassung nur in Verbindung mit Brennwertkesseln erreicht werden kann.

Die in DE 10 2006 044 201 A1, EP 0643274 B1 und EP 08 151 043.0 offenbarten Nachschaltwärmetauscher dienen jedoch nicht der Nachrüstung von Heizkesseln im Sinne eines eingangs genannten Nachrüstbausatzes, sondern sind Bestandteil eines Brennwertkessels bereits bei dessen Installation und auf dessen individuelle Parameter abgestimmt.

Während der Einsatz solcher Wärmetauscher bereits die Energieeffizienz bestimmter Heizkessel erhöhen kann, sind jedoch weitere Verbesserungen erforderlich.

So ist das Nachrüsten von Heizkesseln zur Gebäudeheizung mit Nachschaltwärmetauschern bei einer Vielzahl von Kesseln, insbesondere bei Naturzugkesseln, nicht möglich oder führt zu einer Kombination von nicht füreinander geeigneten oder einer Zulassung zugänglichen Komponenten. Die Ursache hierfür liegt in einer unzulässigen Änderung der Abgasführung durch den Nachschaltwärmetauscher, die zu Beschädigungen beispielsweise am Heizkessel und/oder am Wärmetauscher führen kann und die Sicherheit und Zuverlässigkeit eines Heizsystems beeinträchtigt.

Weiterhin ist die Einbau- und Anschlusssituation von Heizkesseln zur Gebäudeheizung von Fall zu Fall unterschiedlich, so dass vorgefertigte Wärmetauscher oder Nachrüstbausätze oftmals nicht zu den tatsächlichen Gegebenheiten vor Ort passen. Ein zusätzliches Problem in diesem Zusammenhang stellt der üblicherweise sehr begrenzte Bauraum dar. Flexible Lösungen benötigen in der Regel mehr Platz, wohingegen kompakte Lösungen meist keine ausreichende Flexibilität hinsichtlich beispielsweise der Platzierung von Anschlüssen für Abgasleitungen, Kondensatabführung etc. aufweisen.

Weiterhin ist der Anschluss von Wärmetauschern bzw. Nachrüstbausätzen häufig aufwändig und fehleranfällig, insbesondere wenn auch elektrische Komponenten mit anzuschließen sind.

Der Einsatz von Nachrüstwärmetauschern für Heizkessel zur Gebäudeheizung ist aufgrund der genannten Probleme - insbesondere hinsichtlich der Kompatibilität mit verschiedenen Heizkesselbauarten und der damit zusammenhängenden Sicherheit und Zuverlässigkeit des Heizsystems, der räumlichen Einbausituation sowie des Anschlussaufwandes - auf wenige Heizsystem-Bauweisen und deren Einbausituation beschränkt.

Es besteht daher ein Bedarf für einen Nachrüstbausatz für einen Heizkessel zur Gebäudeheizung, der einen oder mehrere der genannten Nachteile vermindert oder beseitigt.

Weiterhin besteht ein Bedarf an einem kompakten und gleichzeitig hinsichtlich seiner Anschlussmöglichkeiten flexiblen Nachrüstbausatz, der zudem an einen Heizkessel zur Gebäudeheizung leicht und sicher anzuschließen ist.

Es besteht weiterhin ein Bedarf für einen Nachrüstbausatz, der in verbesserter Weise mit der Steuerung des Brenners zusammenwirken und vereinfacht montiert werden kann.

Aufgabe der vorliegenden Erfindung ist es, einen Nachrüstbausatz für einen Heizkessel zur Gebäudeheizung bereitzustellen, der für eine Vielzahl von Kesselbauarten, insbesondere auch unabhängig von deren Einbausituation, geeignet ist und dem zuvor erläuterten Bedarf zumindest teilweise entspricht.

Die erfindungsgemäße Aufgabe wird durch einen Nachrüstbausatz der eingangs genannten Art gelöst, bei dem der Abgasstutzen ein Gebläse aufweist.

Die Erfindung liegt die Erkenntnis zugrunde, dass beim Nachschalten eines Wärmetauschers an einen Heizkessel ein Überdruck im Kessel bzw. am Abgasausgang des Kessels entstehen kann. Bei vielen Heizkessen kann ein solcher durch die Nachrüstung eines Nachschaltwärmetauschers verursachte Überdruck zu Problemen im Betrieb führen. Insbesondere Naturzugkessel sind für einen Betrieb mit Überdruck nicht geeignet.

Weiterhin liegt der Erfindung die Erkenntnis zugrunde, dass in diesem Zusammenhang das Bestehen einer durchgängigen Fluidverbindung zwischen dem Abgasausgang des Heizkessels über den Anschlussstutzen, den abgasdurchströmten Teil und den Abgasstutzen des Wärmetauschers bis zur Abgasleitung genutzt werden kann.

Erfindungsgemäß wird im Abgasstutzen ein Gebläse angeordnet, das die Strömung des Abgases im Abgasstutzen beeinflusst. Aufgrund der Fluidverbindung zwischen Anschlussstutzen, gasdurchströmtem Teil des Wärmetauschers, Abgasstutzen und Abgasleitung, beeinflusst das Gebläse im Abgasstutzen auch den Abgasstrom in den anderen genannten Bereichen. Durch eine entsprechende Dimensionierung des Gebläses kann eine gewünschte Abgasströmung erreicht und damit der Druck insbesondere auch am Anschlussstutzen beeinflusst werden.

Das erfindungsgemäße Gebläse ist somit in vorteilhafter Weise in eine kompakte Baueinheit integriert, die weiterhin den Gas-Wasser-Wärmetauscher umfasst. Das Gebläse liegt somit zwischen der Abgasleitung, typischerweise also dem Schornstein eines Gebäudes, und dem Wärmetauscher und kann somit unmittelbar benachbart zum Kessel angeordnet werden, welcher mit dem Nachrüstbausatz ausgerüstet wird. Auf diese Weise wird der durch den Wärmtauscher verursachte Strömungswiderstand durch ein unmittelbar dahinter liegendes Gebläse ausgeglichen, wodurch der Nachrüstbausatz ein insgesamt stark verbessertes Regelverhalten bezüglich der am Abgasstutzen des Kessels vorliegenden Druckverhältnisse aufweist.

Auf diese Weise ermöglicht es der erfindungsgemäße Nachrüstbausatz, verschiedene Arten von Heizkesseln, insbesondere auch Naturzugkessel, mit einem Nachschaltwärmetauscher zu versehen. Durch das Gebläse kann der beispielsweise für Naturzugkessel ungeeignete Überdruck am Anschlussstutzen verhindert oder verringert werden. So kann die Brennersteuerung sich besser an die veränderte Heizsystemkonstellation anpassen und es können Ausfälle aufgrund von Überdruck verhindert werden. Dadurch wird einerseits der Anwendungsbereich des erfindungsgemäßen Nachrüstbausatzes auf verschiedene Heizkesselarten ausgeweitet und andererseits die Zuverlässigkeit und Sicherheit von Heizsystemen mit Nachrüstwärmetauschern verbessert.

Erfindungsgemäß wird hierbei ein Gas-Wasser-Wärmetauscher eingesetzt, der auf kompaktem Raum eine hohe Wärmemenge aus dem Abgas abführen kann und zugleich strömungstechnisch durch das unmittelbar nachgeschaltete Gebläse hinsichtlich des Druckverlustes kompensiert werden kann. Der Wärmetauscher weist hierzu in der Regel noch Ein- und Auslassanschlüsse für das Heizwasser auf, welches im Wärmetauscher insbesondere vorgewärmt werden kann, bevor es in den Wärmetauscher des Heizkessels selbst gelangt.

Die Erfindung kann dadurch fortgebildet werden, dass das Gebläse ein Sauggebläse, vorzugsweise ein Axial-Radial-Gebläse, ist, wobei das Sauggebläse vorzugsweise ausgebildet ist, am Anschlussstutzen einen Unterdruck zu erzeugen.

Im erfindungsgemäßen Nachrüstbausatz ist das Gebläse hinter dem Wärmetauscher und damit auch hinter dem Heizkessel angeordnet. Um einen Überdruck am Anschlussstutzen am Übergang von Heizkessel zu Wärmetauscher zu verhindern, ist es daher vorteilhaft, wenn das hinter dem Wärmetauscher angeordnete Gebläse Abgas aus Richtung des Wärmetauschers ansaugt und vom Wärmetauscher wegführt. Dadurch wird die Strömungsgeschwindigkeit des Abgases in der vom Kessel wegführenden Richtung erhöht und die Bildung eines Überdrucks am Anschlussstutzen vermieden bzw. vermindert. Dabei ist es insbesondere bevorzugt, dass das Gebläse ausgebildet ist, am Anschlussstutzen einen Unterdruck in einer bestimmten Höhe erzeugen zu können. Insbesondere sollte der durch das Gebläse erzeugte Unterdruck am Anschlussstutzen für einen Naturzugkessel geeignet sein.

Ein Axial-Radial-Gebläse ist bezüglich der räumlichen Anordnung des Abgasstutzens für eine Vielzahl von Einbausituationen von Vorteil. Dabei wird das Abgas in axialer Richtung angesaugt und in radialer Richtung abgegeben, was beispielsweise dann von Vorteil ist, wenn das Gebläse am Übergang von einem vertikalen Abgasstutzenabschnitt zu einem horizontalen Abgasstutzenabschnitt angeordnet ist.

Eine Fortbildung des erfindungsgemäßen Nachrüstbausatzes sieht einen Temperatursensor zur Ermittlung der Abgastemperatur und/oder einen Drucksensor zur Ermittlung der Drucks am Anschlussstutzen vor.

Diese Fortbildung dient insbesondere der Überwachung eines fehlerfreien Betriebs des Wärmetauschers und des Gebläses bzw. des Nachrüstbausatzes.

Der Drucksensor dient dazu, den Druck am Anschlussstutzen direkt oder indirekt zu ermitteln. Beispielsweise kann der Drucksensor direkt am Anschlussstutzen angeordnet sein. Alternativ kann der Drucksensor auch an einer anderen Stelle angeordnet sein, die mit dem Anschlussstutzen in Fluidverbindung steht. In diesem Fall sind die Ergebnisse des Drucksensors so zu kalibrieren, dass ein Rückschluss auf den Druck am Anschlussstutzen möglich ist. Sollte der Druck am Anschlussstutzen von einem vorbestimmten Wertebereich oder einem Wertebereich, der beispielsweise aus gleitenden Durchschnittswerten ermittelt wird, abweichen, lässt dies einen Rückschluss auf beispielsweise einen Ausfall oder eine Fehlfunktion des Gebläses, des Wärmetauschers oder des Heizkessels zu.

Der Temperatursensor kann direkt im Abgasstrom angeordnet sein oder die Temperatur des Abgases indirekt messen, indem beispielsweise die Außentemperatur des Abgasstutzens gemessen und daraus auf die Abgastemperatur selbst rückgeschlossen wird. Eine Abweichung der Abgastemperatur von einem vorgegebenen Sollwertbereich oder von einem beispielsweise durch gleitende Durchschnittswerte ermittelten Wertebereich lässt einen Rückschluss auf beispielsweise einen Ausfall oder eine Fehlfunktion des Gebläses, des Wärmetauschers oder des Heizkessels zu.

Durch diese erfindungsgemäße Fortbildung ist es möglich, Ausfälle und/oder Fehlfunktionen des Heizsystems bzw. des Heizkessels, des Wärmetauschers und/oder des Gebläses zu identifizieren und gegebenenfalls Maßnahmen zur Beseitigung der Störung einzuleiten. Dadurch kann insbesondere die Sicherheit und Zuverlässigkeit des Heizsystems weiter verbessert werden.

Die Erfindung kann weiter fortgebildet werden durch ein Steuerungsmittel, das ausgebildet ist, den Betrieb eines Heizkessels zu unterbrechen und/oder ein Warnsignal auszugeben, wenn die Abgastemperatur und/oder der Druck am Anschlussstutzen von einem vorbestimmten Sollwertbereich abweicht bzw. abweichen.

Diese erfindungsgemäße Fortbildung detektiert nicht nur eine Störung oder Fehlfunktion wie zuvor beschrieben, sondern ist darüber hinaus ausgebildet, das Heizsystem abzuschalten und/oder eine entsprechende Warnung als beispielsweise optisches oder akustisches Signal auszugeben. Beispielsweise ist es auch möglich, zunächst ein Warnsignal auszugeben und das Heizsystem erst dann abzuschalten, wenn die Störung bzw. Fehlfunktion für einen bestimmten Zeitraum angedauert hat. Das Abschalten des Heizsystems kann beispielsweise durch Unterbrechung des Betriebs des Heizkessels erfolgen. Beispielsweise kann das Steuerungsmittel mit der Stromzufuhr des Heizkessels verbunden und ausgebildet sein, die Stromzufuhr zum Heizkessel zu unterbrechen, wenn eine Störung oder Fehlfunktion vorliegt. Weiterhin kann das Steuerungsmittel auch mit der Heizkesselsteuerung verbunden und ausgebildet sein, über die Heizkesselsteuerung eine Abschaltung des Heizkessels zu initiieren.

Auf diese Weise können Schäden am Heizsystem vermieden werden und die Sicherheit und die Zuverlässigkeit des Heizsystems weiter erhöht werden, da eine anhaltende Störung oder Fehlfunktion und damit möglicherweise eintretende Probleme vermieden werden können. Dies ist insbesondere auch dann von Vorteil, wenn - beispielsweise abwesenheitsbedingt - kein Eingriff eines Benutzers innerhalb einer kurzen Zeit möglich ist.

Die Erfindung kann weiter dadurch fortgebildet werden, dass das Gebläse im Einbauzustand des Wärmetauschers oberhalb einer Kondensatsammeleinheit angeordnet ist.

Wie eingangs beschrieben, arbeiten Wärmetauscher meist nach dem Prinzip, dass die Abgase eines Brenners eines Heizkessels zumindest teilweise kondensiert werden. Das im Wärmetauscher entstehende Kondensat ist abzuleiten, was üblicherweise durch eine Kondensatsammeleinheit geschieht. Wenn das erfindungsgemäß vorgesehene Gebläse nicht nur mit Abgas, sondern mit einer Abgas-Kondensat-Mischung gespeist wird, können Beschädigungen oder erhöhter Verschleiß am Gebläse auftreten. Dabei ist es vorteilhaft, wenn die Kondensatsammeleinheit am unteren Ende des Wärmetauschers bzw. in einem unteren Bereich des Abgasstutzens angeordnet, damit das Kondensat durch Schwerkraft abfließen kann, bevor es in das Gebläse gelangen kann. Die Kondensatsammeleinheit besteht vorzugsweise aus einem Kondensatableitungsrohr und einer daran angeschlossenen Neutralisationsbox mit einem Ablaufanschluss. Es ist weiterhin insbesondere vorteilhaft, wenn das Gebläse oberhalb einer Kondensatsammeleinheit angeordnet ist und auf diese Weise weniger oder vorzugsweise kein Kondensat in das Gebläse gelangen kann.

Der erfindungsgemäße Nachrüstbausatz kann weiter dadurch fortgebildet werden, dass der Abgasstutzen im Einbauzustand des Wärmetauschers derart angeordnet ist, dass ein erster Abschnitt des Abgasstutzens in Höhe des unteren Drittels des Wärmetauschers und im Wesentlichen horizontal angeordnet ist, ein zweiter Abschnitt des Abgasstutzens in Höhe des oberen Drittels des Wärmetauschers und im Wesentlichen horizontal angeordnet ist, und ein dritter Abschnitt des Abgasstutzens zwischen dem ersten und dem zweiten Abschnitt und im Wesentlichen vertikal angeordnet ist, wobei das Gebläse vorzugsweise zwischen dem zweiten und dem dritten Abschnitt des Abgasstutzens angeordnet ist.

Die erfindungsgemäße Fortbildung ist durch einen besonders kompakten Aufbau des Nachrüstbausatzes gekennzeichnet. Insbesondere wenn die beiden horizontalen ersten und dritten Abschnitte des Abgasstutzens nur kurz ausgebildet sind, und der vertikale zweite Abschnitt des Abgasstutzens im Wesentlichen der Höhe des Wärmetauschers entspricht oder kürzer ist, kann eine Anordnung mit sehr geringem Raumbedarf realisiert werden. Die verschiedenen Abschnitte sind dabei vorzugsweise durch 90°-Knieverbindungen miteinander verbunden. Die Anordnung führt dazu, dass der vertikale dritte Abschnitt nahe am Wärmetauscher und vorzugsweise parallel zu dessen Außenwand geführt werden kann und gleichzeitig ein horizontaler Ausgang des Abgasstutzens zur Verbindung mit einer Abgasleitung durch den zweiten Abschnitt bereitgestellt wird.

Das Gebläse ist dabei vorzugsweise im Knie zwischen dem zweiten und dem dritten Abschnitt des Abgasstutzens angeordnet, so dass das Abgas aus dem dritten, vertikalen Abschnitt angesaugt und in den zweiten, horizontalen Abschnitt abgegeben wird. Diese Fortbildungsform ist insbesondere in Kombination mit dem zuvor beschriebenen Axial-Radial-Gebläse bevorzugt.

Die Kondensatsammeleinheit ist vorzugsweise im ersten Abschnitt des Abgasstutzens oder im Knie zwischen dem ersten und dritten Abschnitt des Abgasstutzens angeordnet. Diese Fortbildungsform ist auch deshalb bevorzugt, da sie auch den in der vorangehenden Fortbildungsform beschriebenen Vorteil aufweist, dass das Eindringen von Kondensat in das Gebläse verhindert bzw. vermindert werden kann.

Die Erfindung kann dadurch fortgebildet werden, dass zumindest ein Abschnitt des Abgasstutzens in mehreren verschiedenen, zueinander um eine vertikale Achse verschwenkten Positionen montierbar ist.

Vorzugsweise ist der dritte Abschnitt des Abgasstutzens, vorzugsweise zusammen mit dem Gebläse, in verschiedenen Positionen montierbar. Dabei sind folgende Positionen besonders bevorzugt:
- dritter Abschnitt des Abgasstutzens im Wesentlichen parallel zu einer Außenwand des Wärmetauschers oder
- dritter Abschnitt des Abgasstutzens im Wesentlichen rechtwinklig zur Außenwand des Wärmetauschers.

Diese Fortbildungsform bietet eine hohe Flexibilität bezüglich des Anschlusses des Abgasstutzens an eine Abgasleitung. Die Lage der Abgasleitung und deren Anschlussöffnung sind meist durch bauliche Gegebenheiten am Einbauort des erfindungsgemäßen Nachrüstbausatzes festgelegt. Der erfindungsgemäße Nachrüstbausatz ermöglicht es auf vorteilhafte Weise, den Abgasstutzen flexibel auf die Einbausituation auszurichten bei einem gleichzeitig sehr kompakten Aufbau des Nachrüstbausatzes. Der dritte Abschnitt des Abgasstutzens, vorzugsweise mit dem Gebläse, kann dabei in bestimmten diskreten Positionen oder aber stufenlos verschwenkbar ausgebildet sein.

Der erfindungsgemäße Nachrüstbausatz kann weiter fortgebildet werden durch einen Steckverbinder zum Anschluss des Wärmetauschers an einen Heizkessel, wobei der Steckverbinder aufweist: einen ersten Steckanschluss zum Anschluss des Steckverbinders an eine Heizkesselsteuerung, einen zweiten Steckanschluss zum Anschluss des Steckverbinders an einen Brenner und einen dritten Steckanschluss zum Anschluss des Steckverbinders an den Wärmetauscher.

Der Anschluss des Wärmetauschers an einen Heizkessel kann erheblich dadurch vereinfacht werden, dass ein Steckverbinder mit drei Anschlüssen bereitgestellt wird und der Anschluss des Wärmetauschers an den Heizkessel dadurch erfolgt, dass jeweils einer der Steckanschlüsse an die Heizkesselsteuerung des Heizkessels, den Brenner des Heizkessels und den Wärmetauscher angesteckt wird. Auf diese Weise kann die Fehleranfälligkeit des Anschlusses erheblich reduziert werden. Vorzugsweise sind die drei Steckanschlüsse dahingehend gekennzeichnet, an welche Komponente sie jeweils anzuschließen sind. Durch den erfindungsgemäßen Nachrüstbausatz mit Steckverbinder ist es möglich, auf eine aufwändige und fehleranfällige Anschlussvariante zu verzichten, bei der ein Monteur die Leitungen des Wärmetauschers einzeln in die Steuerleitungen zwischen Heizkesselsteuerung und Brenner manuell einbinden muss.

Die Erfindung kann dadurch fortgebildet werden, dass der Steckverbinder ausgebildet ist, den Betrieb eines Heizkessels zu unterbrechen und/oder ein Warnsignal auszugeben, wenn die Abgastemperatur und/oder der Druck am Anschlussstutzen des Wärmetauschers von einem vorbestimmten Sollwertbereich abweicht bzw. abweichen.

Wie zuvor beschrieben, ist es vorteilhaft, wenn bei einer Störung und/oder einer Fehlfunktion eine entsprechende Warnung ausgegeben werden kann und/oder der Heizkessel, insbesondere der Brenner, abgeschaltet werden kann. Die erfindungsgemäße Fortbildung sieht vor, dass entsprechende Mittel zum Abschalten des Heizkessels und/oder zur Generierung eines Warnsignals am Steckverbinder ausgebildet sind. Dies kann beispielsweise realisiert sein, indem der Druck- bzw. Temperatursensor über den Steckverbinder derart mit der Stromzufuhr für den Heizkessel verschaltet ist, dass bei einer Sollwertabweichung von Druck und/oder Abgastemperatur die Stromzufuhr zum Heizkessel, insbesondere zum Brenner, unterbrochen wird.

Weiterhin ist es bevorzugt, dass auch das Sauggebläse abgeschaltet wird, wenn der Betrieb des Heizkessels unterbrochen wird. Dazu ist das Sauggebläse vorzugsweise ebenfalls mit der Stromversorgung des Heizkessels gekoppelt, die bei einer Sollwertabweichung von Abgastemperatur und/oder Druck unterbrochen wird.

Die Erfindung kann weiter dadurch fortgebildet werden, dass der dritte Steckanschluss zwischen dem ersten und dem zweiten Steckanschluss angeordnet ist und der erste und zweite Steckanschluss jeweils eine Pinbelegung aufweisen, die einer Pinbelegung einer Steckverbindung zwischen einem Brenner und einer Heizkesselsteuerung entspricht.

Der Steckverbinder des erfindungsgemäßen Nachrüstbausatzes ist insbesondere dann vorteilhaft, einfach und sicher anzuwenden, wenn der erste und zweite Steckanschluss eine Pinbelegung aufweisen, die identisch ist mit der Pinbelegung eines jeweils komplementären Steckanschlusses am Brenner und an der Heizkesselsteuerung. Hintergrund dieser Fortbildung ist, dass üblicherweise die Heizkesselsteuerung über eine Steckverbindung mit dem Brenner verbunden ist. Ein besonders vorteilhafter Einsatz des Steckverbinders ergibt sich, wenn die Steckverbindung zwischen Brenner und Heizkesselsteuerung gelöst wird und der Steckverbinder mit dem ersten und zweiten Steckanschluss zwischen diese Steckverbindung zwischen Brenner und Heizkesselsteuerung eingebracht werden kann. Der zwischen dem ersten und dem zweiten Steckanschluss angeordnete dritte Steckanschluss kann dann an den Wärmetauscher angeschlossen werden. Die zuvor beschriebene Einkopplung von beispielsweise Stromzufuhr des Gebläses und/oder Druck- bzw. Temperatursensor ist vorzugsweise im Steckverbinder realisiert, so dass außer dem Einstecken der drei Steckanschlüsse keine weiteren insbesondere keine weiteren elektrischen Anschlussarbeiten zwischen Wärmetauscher bzw. Nachrüstbausatz, Brenner und Heizkesselsteuerung erforderlich sind.

Weitere vorteilhafte Ausführungsvarianten der erfindungsgemäßen Vorrichtung ergeben sich durch Kombination der hier erörterten bevorzugten Merkmale.

Ein weiterer Aspekt der Erfindung ist ein Wärmetauscher der eingangs genannten Art, bei dem der Abgasstutzen ein Gebläse aufweist.

Ein weiterer Aspekt der Erfindung ist ein Steckverbinder zum Anschluss eines Nachrüstbausatzes wie zuvor beschrieben und/oder eines vorgenannten Wärmetauschers an einen Heizkessel zur Gebäudeheizung, wobei der Steckverbinder aufweist: einen ersten Steckanschluss zum Anschluss des Steckverbinders an eine Heizkesselsteuerung, einen zweiten Steckanschluss zum Anschluss des Steckverbinders an einen Brenner und einen dritten Steckanschluss zum Anschluss des Steckverbinders an den Wärmetauscher.

Ein weiterer Aspekt der Erfindung ist die Verwendung eines zuvor beschriebenen Wärmetauschers zum Nachrüsten eines Heizkessels zur Gebäudeheizung.

Ein weiterer Aspekt der Erfindung ist die Verwendung eines zuvor beschriebenen Steckverbinders zum Anschluss eines zuvor beschriebenen Nachrüstbausatzes und/oder eines zuvor beschriebenen Wärmetauschers an einen Heizkessel zur Gebäudeheizung.

Ein weiterer Aspekt der Erfindung ist ein eingangs genanntes Verfahren zur Steigerung der Energieeffizienz eines Heizkessels zur Gebäudeheizung, das durch den Schritt Bereitstellen eines Gebläses im Abgasstutzen gekennzeichnet ist.

Die genannten weiteren Aspekte der Erfindung können fortgebildet werden durch Merkmale bzw. Verfahrensschritte, die sie insbesondere dafür geeignet machen, für einen erfindungsgemäßen Nachrüstbausatz und seine Fortbildungen verwendet zu werden. Zu den Ausführungsformen, spezifischen Merkmalen, Varianten und Vorteilen der Merkmale dieser Aspekte und ihrer Fortbildungen wird auf die vorangegangene Beschreibung zu den entsprechenden Merkmalen des Nachrüstbausatzes verwiesen.

Eine bevorzugte Ausführungsform der Erfindung wird beispielhaft anhand der beiliegenden Figuren beschrieben. Es zeigen:
- Fig. 1:: eine dreidimensionale Ansicht eines Heizungskessels mit einem erfindungsgemäßen Nachrüstbausatz in einer ersten Montagevariante mit einer Abgasleitung und einer Kondensatsammeleinheit;
- Fig. 2:: eine weitere dreidimensionale Ansicht des erfindungsgemäßen Nachrüstbausatzes gemäß Fig. 1 mit Kondensatsammeleinheit und ohne Abgasleitung;
- Fig. 3:: eine weitere dreidimensionale Ansicht des erfindungsgemäßen Nachrüstbausatzes gemäß Fig. 1 mit Kondensatsammeleinheit;
- Fig. 4:: eine weitere dreidimensionale Ansicht des erfindungsgemäßen Nachrüstbausatzes gemäß Fig. 1;
- Fig. 5:: eine weitere dreidimensionale Ansicht des erfindungsgemäßen Nachrüstbausatzes gemäß Fig. 1;
- Fig. 6:: eine Frontansicht des erfindungsgemäßen Nachrüstbausatzes gemäß Fig. 1;
- Fig. 7:: eine Seitenansicht des erfindungsgemäßen Nachrüstbausatzes gemäß Fig. 1;
- Fig. 8:: eine Draufsicht auf den erfindungsgemäßen Nachrüstbausatz gemäß Fig. 1 in einer zweiten Montagevariante;
- Fig. 9:: eine dreidimensionale Darstellung des erfindungsgemäßen Nachrüstbausatzes gemäß Fig. 1 in der zweiten Montagevariante in teilweiser Explosionsdarstellung;
- Fig. 10:: eine Draufsicht auf den erfindungsgemäßen Nachrüstbausatz gemäß Fig. 1 in der zweiten Montagevariante;
- Fig. 11:: eine Draufsicht auf den erfindungsgemäßen Nachrüstbausatz gemäß Fig. 1 in der ersten Montagevariante;
- Fig. 12:: eine Draufsicht auf den erfindungsgemäßen Nachrüstbausatz gemäß Fig. 1 in einer dritten Montagevariante;
- Fig. 13:: einen Verdrahtungsplan eine erfindungsgemäßen Steckverbinders.

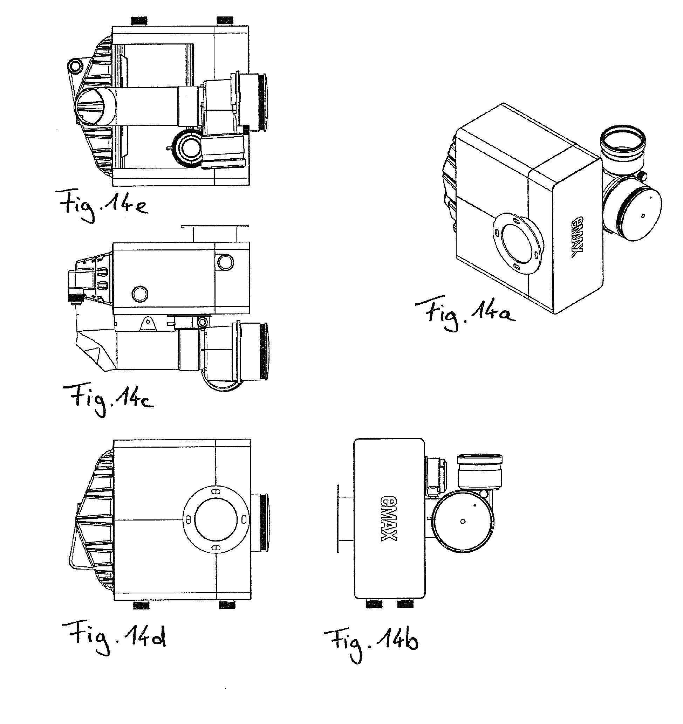

- Fig. 14a:: eine perspektivische Ansicht einer zweiten Ausführungsform des erfindungsgemäßen Nachrüstbausatzes,
- Fig. 14b:: eine Draufsicht der zweiten Ausführungsform gemäß Fig. 1,
- Fig. 14c:eine: Unteransicht der zweiten Ausführungsform gemäß Fig. 1,
- Fig. 14d:: eine Rückansicht der zweiten Ausführungsform gemäß Fig. 1,
- Fig. 14e:: eine Frontalansicht der zweiten Ausführungsform gemäß Fig. 1,

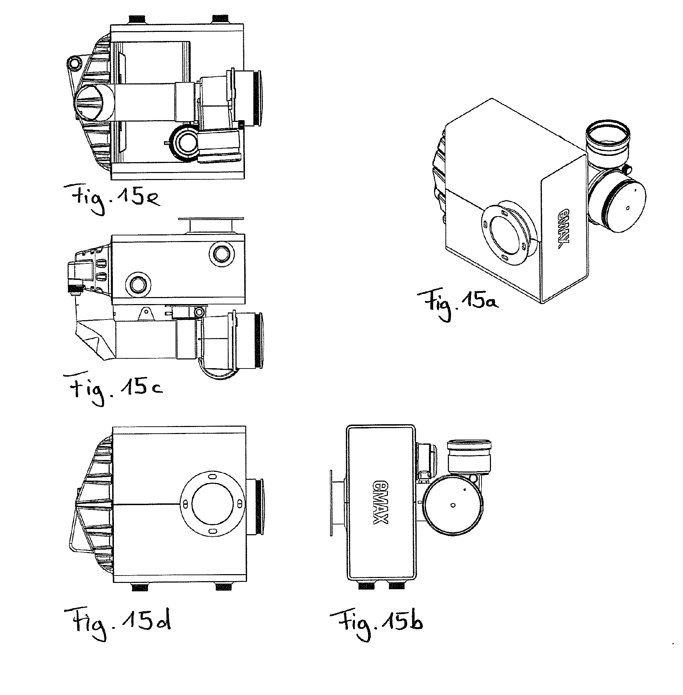

- Fig. 15a-d:: Ansicht gemäß Fig. 14a-e einer dritten Ausführungsform des erfindungsgemäßen Nachrüstbausatzes,

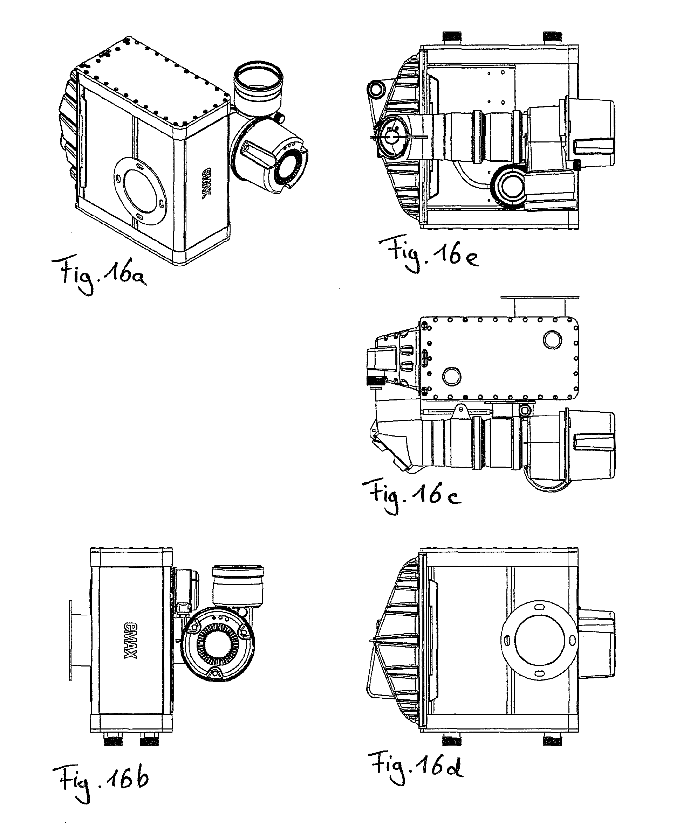

- Fig. 16a-d:: Ansicht gemäß Fig. 14a-e einer vierten Ausführungsform des erfindungsgemäßen Nachrüstbausatzes,

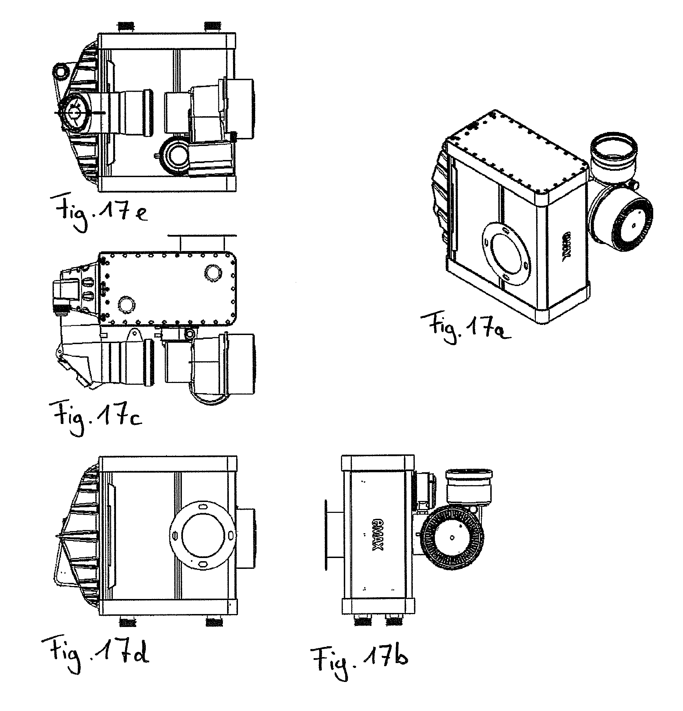

- Fig. 17a-d:: Ansicht gemäß Fig. 14a-e einer fünften Ausführungsform des erfindungsgemäßen Nachrüstbausatzes,

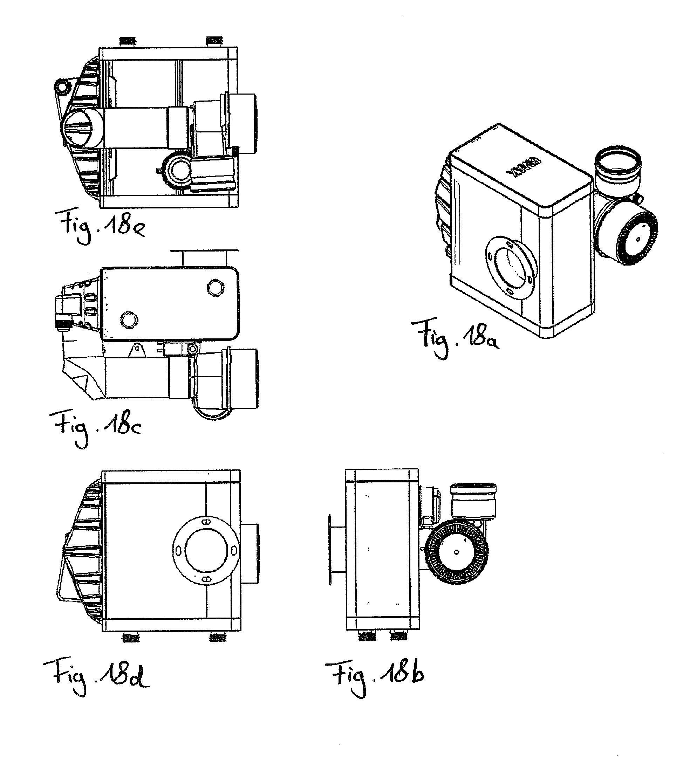

- Fig. 18a-d:: Ansicht gemäß Fig. 14a-e einer sechsten Ausführungsform des erfindungsgemäßen Nachrüstbausatzes, und

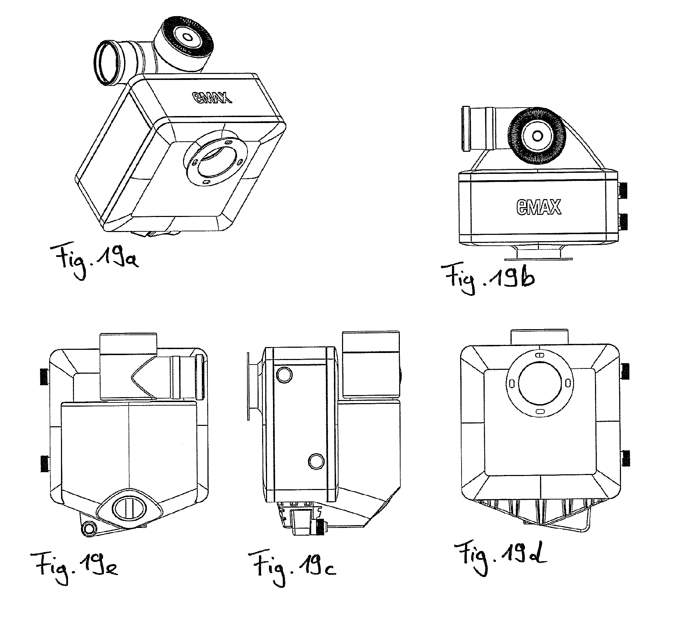

- Fig. 19a-d:: Ansicht gemäß Fig. 14a-e einer siebten Ausführungsform des erfindungsgemäßen Nachrüstbausatzes.

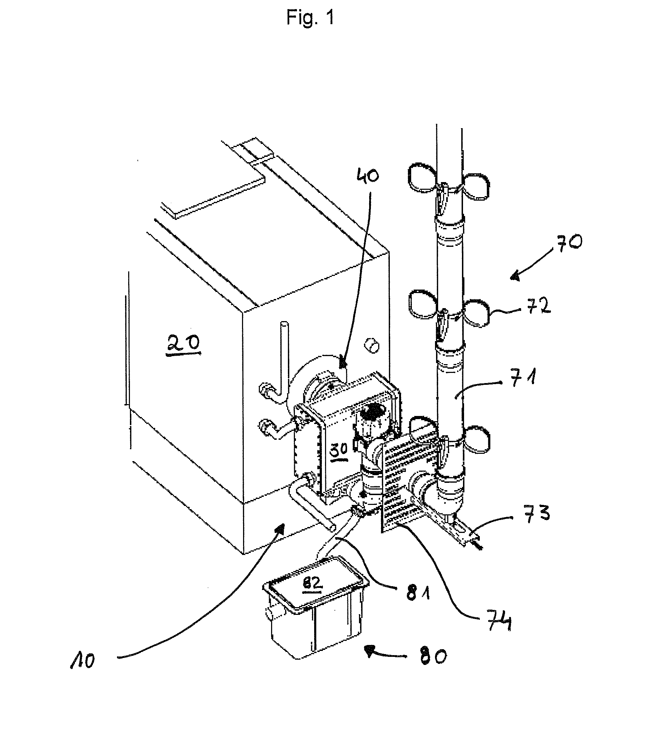

Fig. 1 zeigt ein Heizsystem mit einem Heizkessel 20 und einem erfindungsgemäßen Nachrüstbausatz 10, der über einen Anschlussstutzen 40 mit dem Heizkessel verbunden ist und über einen Abgasstutzen 50 mit einer Abgasleitung 70 verbunden ist. Weiterhin ist am erfindungsgemäßen Nachrüstbausatz 10 eine Kondensatsammeleinheit 80 angeordnet.

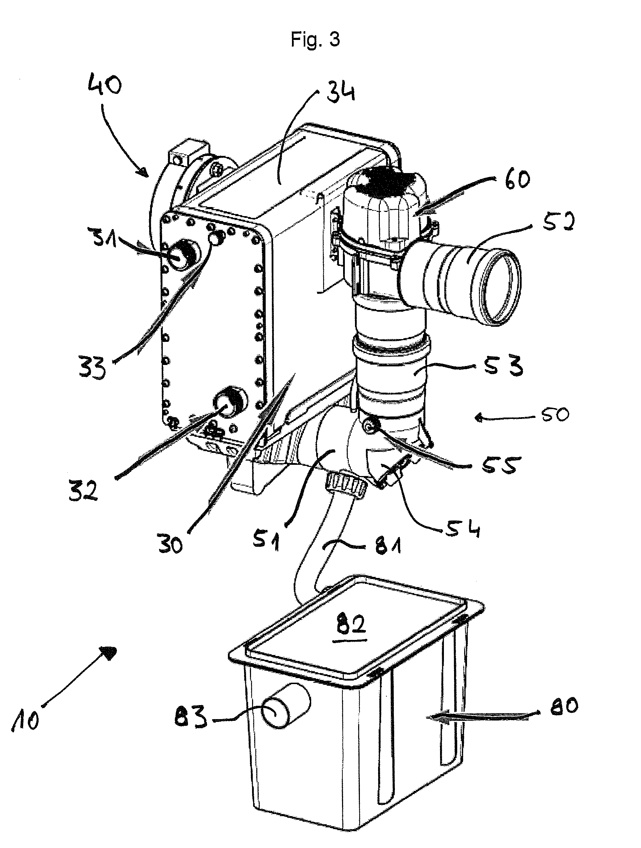

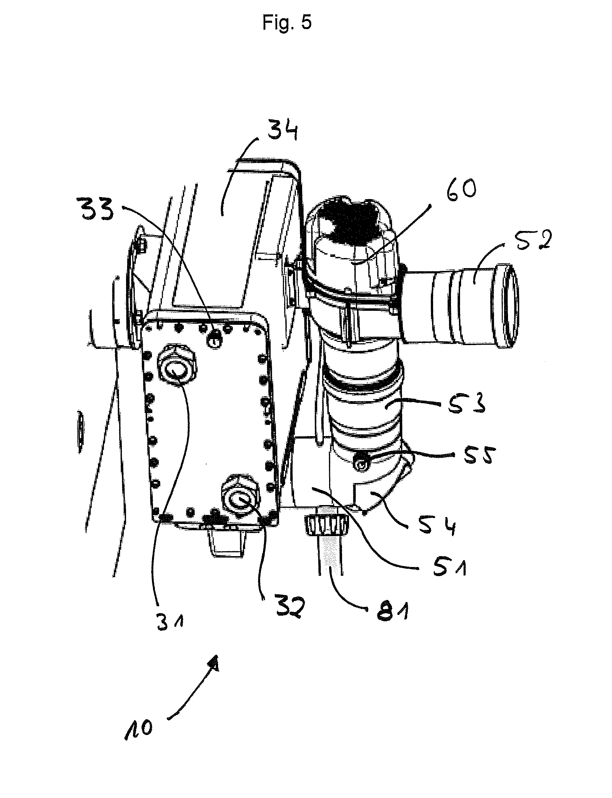

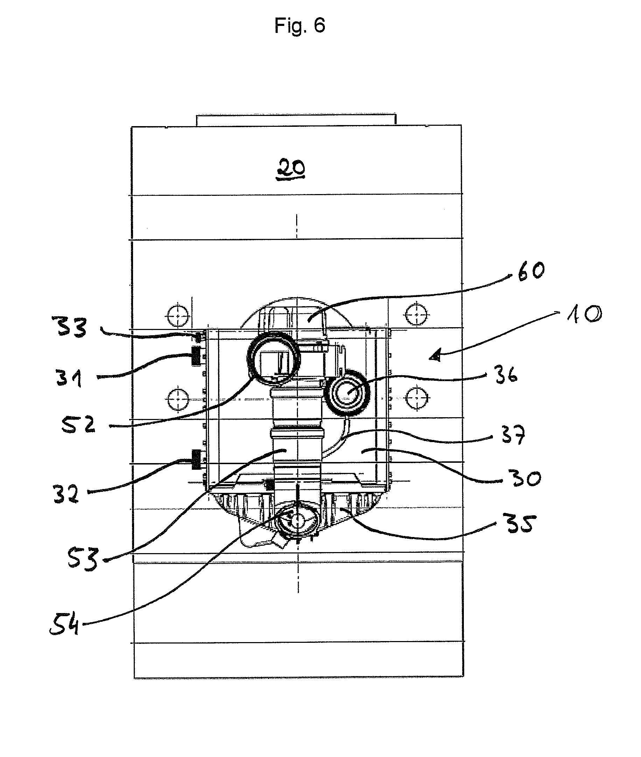

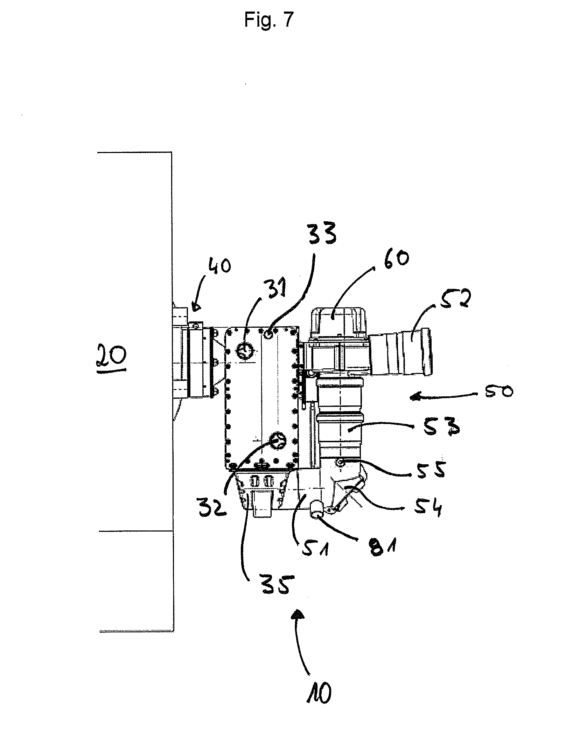

Wie im Detail insbesondere auch in den Figuren 3 bis 7 zu erkennen, weist der erfindungsgemäße Nachrüstbausatz 10 einen Wärmetauscher 30 auf, der eine Revisionsöffnung 34, eine Wasserzu- bzw. -abfuhr 31, 32 sowie einen Entlüfter 33 und einen Abgassammler 35 aufweist. An dem Abgassammler 35 des Wärmetauschers 30 ist der Abgasstutzen 50 angeordnet. Ein erster, horizontaler Abschnitt des Abgasstutzens 51 ist über eine Knieverbindung 54 mit einem dritten, vertikalen Abschnitt 53 verbunden. Am ersten Abschnitt 51 des Abgasstutzens ist eine Kondensatsammeleinheit 80 über eine Kondensatleitung 81 mit einer Neutralisationsbox 82 mit einem Überlauf bzw. Ablaufanschluss 83 angeordnet. Weiterhin weist der Abgasstutzen einen Messstopfen 55 im Bereich der Knieverbindung 54 auf.

Am Übergang zwischen dem vertikalen dritten Abschnitt 53 und dem horizontal angeordneten zweiten Abschnitt 52 des Abgasstutzens ist ein Axial-Radial-Gebläse 60 angeordnet. Dieses ist ausgebildet, Abgas aus der Richtung des vertikalen dritten Abschnitts 53 des Abgasstutzens anzusaugen und in den horizontalen zweiten Abschnitt 52 des Abgasstutzens abzugeben.

Der Wärmetauscher 30 ist kesselseitig mit dem Anschlussstutzen 40 mit einem Abgasauslass des Heizkessels 20 verbunden. Der Anschlussstutzen 40 steht über den vom Abgas durchströmten Teil des Wärmetauschers 30, den Abgassammler 35 sowie den Abgasstutzen 50 mit der Abgasleitung 60 in Fluidverbindung. Das als Axial-Radial-Gebläse ausgebildete Sauggebläse 60 ist ausgebildet, einen bestimmten Druck, insbesondere einen Unterdruck, am Anschlussstutzen 40 zu erzeugen.

Durch die Anordnung des Gebläses 60 am oberen Knie des Abgasstutzens 50 wird sichergestellt, dass im Wärmetauscher 30 auftretendes und über den Abgassammler 35 in den ersten Abschnitt 51 des Abgasstutzens gelangendes Kondensat nicht in das Gebläse 60 gelangt, sondern über den Kondensatablauf 81 in die Neutralisationsbox 82 abgeführt wird.

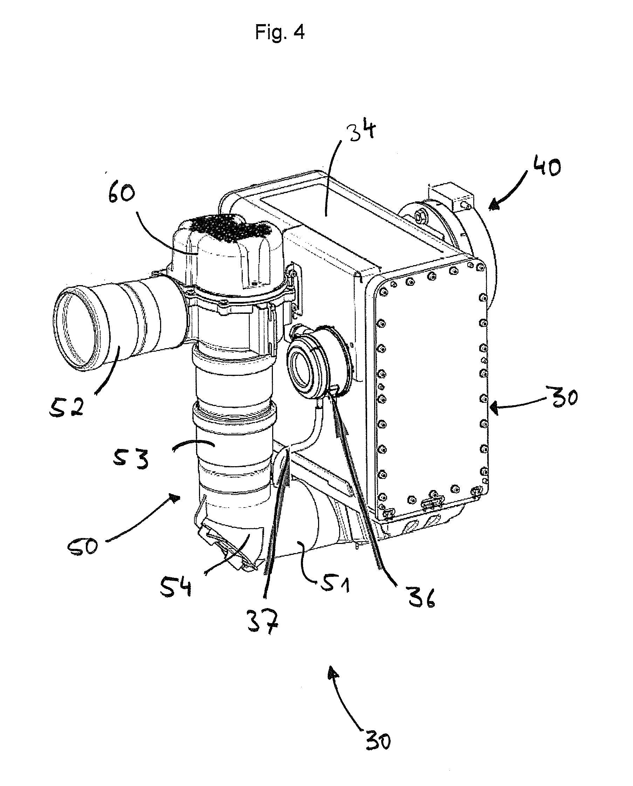

Wie in den Fig. 4, 6 und 8 zu erkennen, ist an der Rückwand des Wärmetauschers 30 ein Drucksensor 36 angeordnet und über den Sensorschlauch 37 mit dem Abgasstutzen 50 verbunden. Der Drucksensor 36 ist ausgebildet, den Abgasdruck zu ermitteln. Dabei kann aus dem im Abgasstutzen 50 ermittelten Druck auf den am Anschlussstutzen 40 herrschenden Druck, der beispielsweise für den Betrieb eines Naturzugkessels relevant ist, geschlossen werden. Der erfindungsgemäße Nachrüstbausatz kann weiterhin einen Temperatursensor (nicht dargestellt) aufweisen, der beispielsweise die Oberflächentemperatur des Abgasstutzens 50 misst, woraus auf die Abgastemperatur geschlossen werden kann.

Die Abgasleitung 70 weist am Übergang zum zweiten Abschnitt 52 des Abgasstutzens 50 eine Wandblende 74 zur Durchführung der Abgasleitung durch eine Schachtwand (nicht dargestellt) auf, an die sich ein Auflager 73 für die Schachteinführung anschließt. Die Abgasleitung 71 ist mit Abstandhaltern 72 versehen, die einen Mindestabstand der Abgasleitung 71 beispielsweise von den Schachtwänden eines Kamins (nicht dargestellt) sicherstellen.

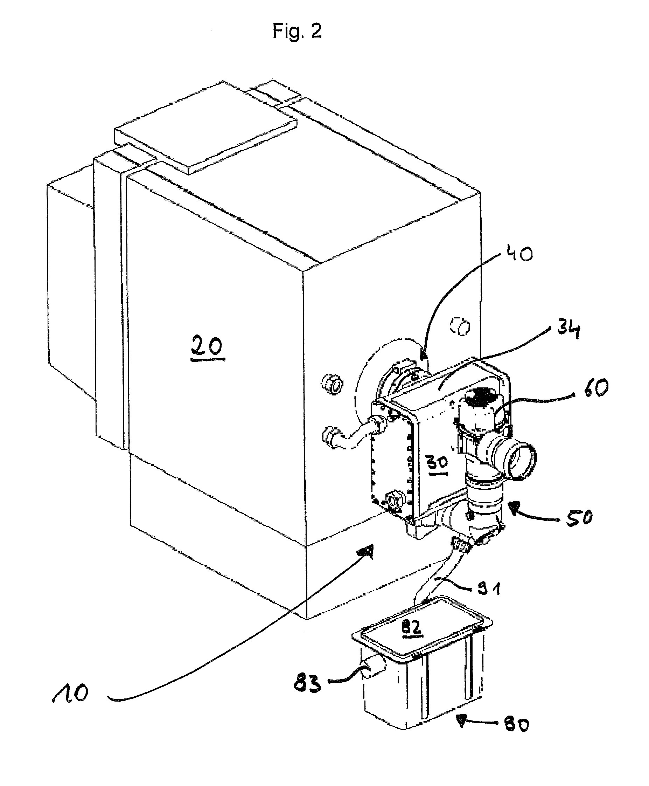

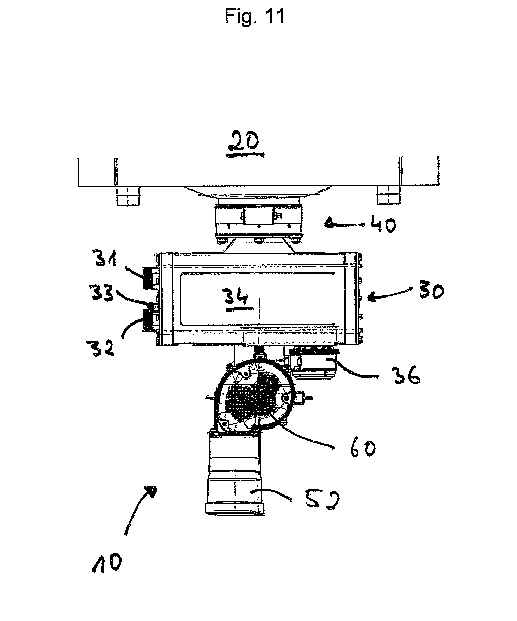

In den Figuren 1 bis 7 und 11 ist der erfindungsgemäße Nachrüstbausatz in einer ersten Montagevariante gezeigt. In dieser ersten Montagevariante weist der zweite Abschnitt 52 des Abgasstutzens 50 im wesentlichen senkrecht von der Rückwand des Wärmetauschers 30 weg.

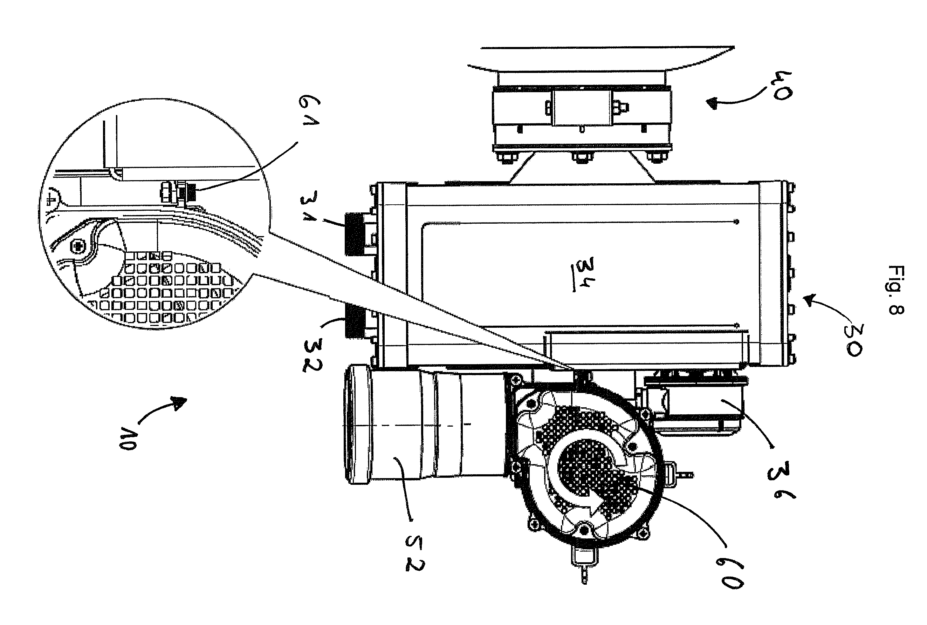

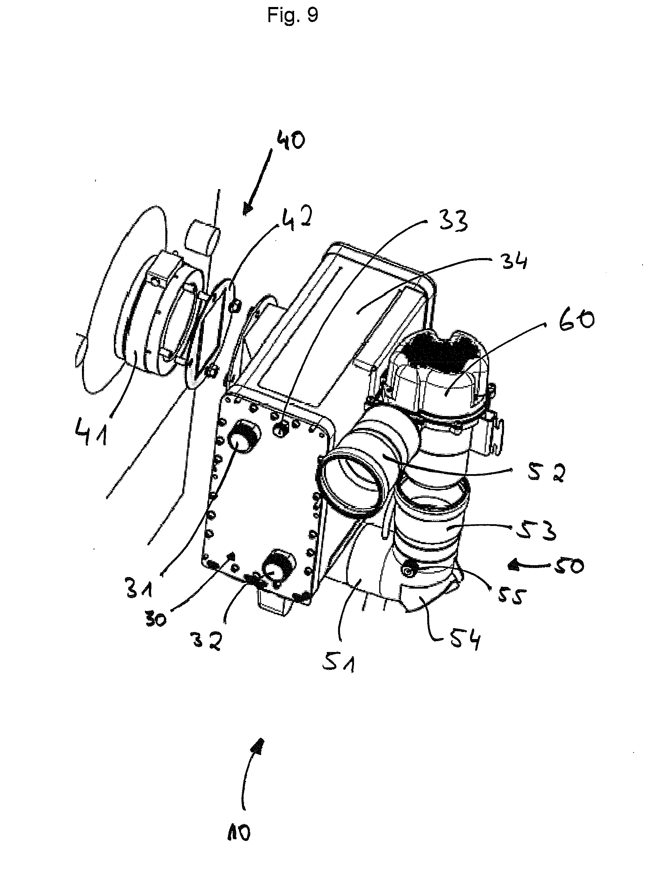

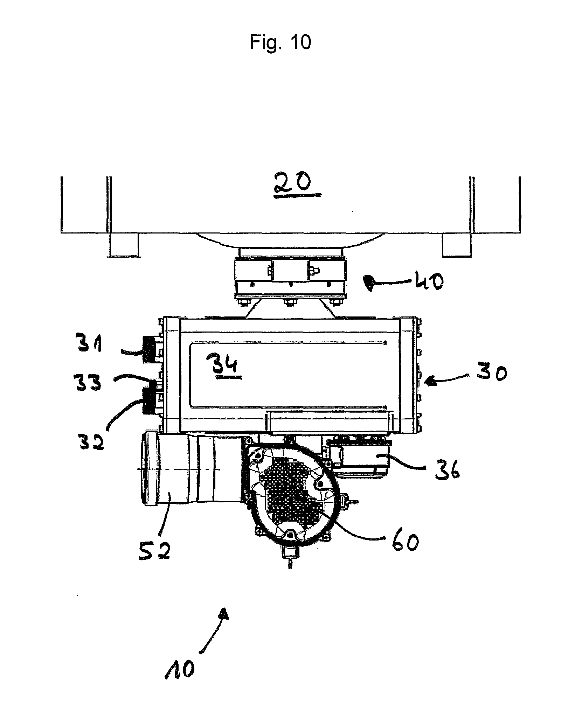

Fig. 8, 9 und 10 zeigen eine zweite Montagevariante des erfindungsgemäßen Nachrüstbausatzes, bei dem der zweite Abschnitt 52 des Abgasstutzens 50 parallel zur Rückwand des Wärmetauschers 30 verläuft. In der Detaildarstellung in Fig. 8 ist weiterhin eine Befestigungsschraube 61 zu erkennen, mit der der zweite Abschnitt 52 des Abgasstutzens 50 in der gewählten Montageposition lösbar fixiert werden kann. In Fig. 9 ist weiterhin die Verbindung zwischen Heizkessel 20 und Wärmetauscher 30 über den Anschlussstutzen 40 detailliert dargestellt. Dabei wird an einem kesselseitigen Universalflansch 41 eine Flanschdichtung 42 positioniert und der Wärmetauscher 30 anschließend mit Muttern befestigt.

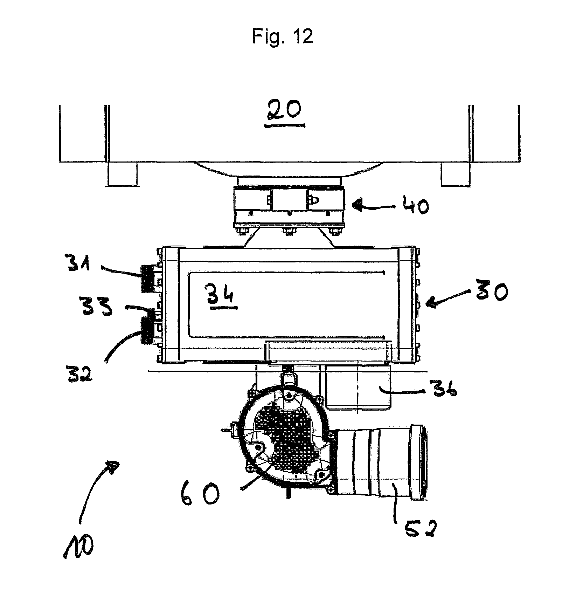

Fig. 12 zeigt den erfindungsgemäßen Nachrüstbausatz in einer dritten Montagevariante, bei der der zweite Abschnitt 52 des Abgasstutzens 50 wie auch in der zweiten Montagevariante parallel zur Rückwand des Wärmetauschers 30 verläuft. Allerdings weist die Öffnung des zweiten Abschnitts 52 des Abgasstutzens 50 in der dritten Montagevariante in einer der zweiten Montagevariante um 180° entgegengesetzte Richtung. Weiterhin ist der zweite Abschnitt 52 des Abgasstutzens 50 in der dritten Montagevariante weiter von der Rückwand des Wärmetauschers 30 beabstandet als in der zweiten Montagevariante.

Durch die verschiedenen Montagevarianten des erfindungsgemäßen Nachrüstsatzes 10 ergeben sich vielfältige, flexible Anschlussmöglichkeiten für verschiedne Einbausituationen.

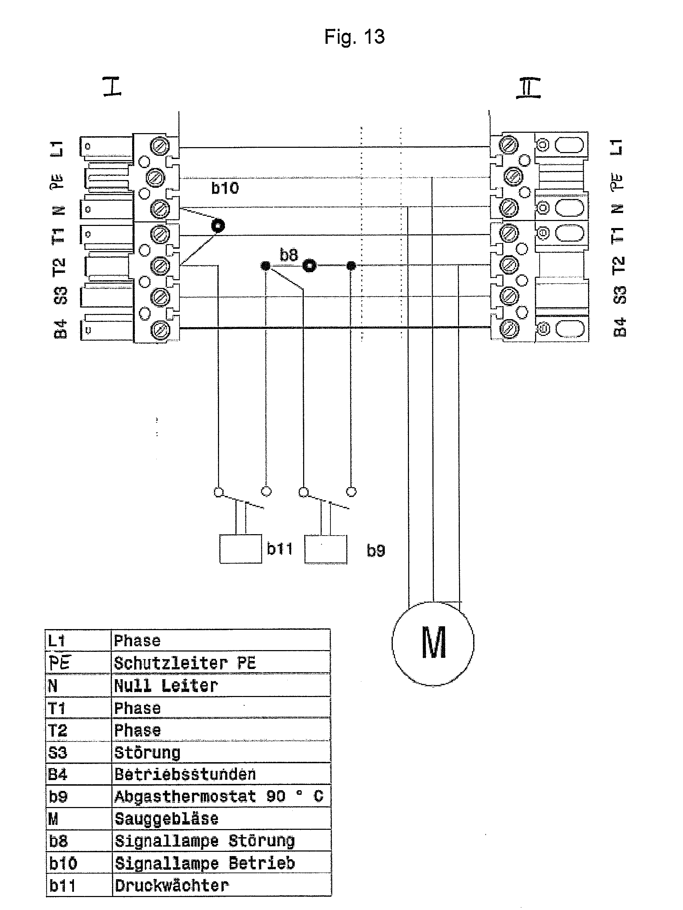

Fig. 13 zeigt einen Verdrahtungsplan für einen erfindungsgemäßen Steckverbinder. Die in Fig. 13 dargestellten Bezugszeichen haben die folgende Bedeutung:

| L1 | Phase |
|---|---|
| PE | Schutzleiter PE |
| N | Null-Leiter |
| T1 | Phase |
| T2 | Phase |
| S3 | Störung |
| B4 | Betriebsstunden |
| M | Sauggebläse |
| b8 | Signallampe Störung |
| b9 | Abgasthermostat 90°C |
| b10 | Signallampe Betrieb |
| b11 | Druckwächter |

Die beiden Steckanschlüsse I und II entsprechen den jeweils komplementären Steckanschlüssen an der Heizkesselsteuerung und am Brenner eines Heizkessels. Die Pinbelegung der beiden Steckanschlüsse I und II stimmen überein. Ein dritter Steckanschluss (nicht dargestellt) dient dem Anschluss des Steckverbinders an den Wärmetauscher und mit Druck- und Temperatursensor sowie Sauggebläse.

Im ordnungsgemäßen Betrieb leuchtet die grüne Signallampe b10 auf.

Das Sauggebläse ist in die Phase T2, den Nullleiter sowie den Schutzleiter PE eingekoppelt.

Der Drucksensor b11 und der Temperatursensor b9 sind in die Phase T2 eingekoppelt, so dass bei einer Druck- oder Temperaturstörung die rote Signallampe b8 aufleuchtet.

## Patentansprüche

1. Nachrüstbausatz für einen Heizkessel zur Gebäude- und/oder Brauchwasserheizung, umfassend
- einen Gas-Wasser-Wärmetauscher,
- einen Anschlussstutzen zum Anschließen des Wärmetauschers an einen Heizkesselabgasausgang und
- einen Abgasstutzen zum Anschließen des Wärmetauschers an eine Abgasleitung,
**gekennzeichnet durch** ein Gebläse welches im Bereich des Abgasstutzens angeordnet ist und zur Förderung des Abgases dient.

2. Nachrüstbausatz nach dem vorhergehenden Anspruch,
**dadurch gekennzeichnet, dass** das Gebläse ein Sauggebläse, vorzugsweise ein Axial-Radial-Gebläse, ist, wobei das Sauggebläse vorzugsweise ausgebildet ist, am Anschlussstutzen einen Unterdruck zu erzeugen.

3. Nachrüstbausatz nach einem der beiden vorhergehenden Ansprüche, **gekennzeichnet durch** einen Temperatursensor zur Ermittlung der Abgastemperatur und/oder einen Drucksensor zur Ermittlung der Drucks am Anschlussstutzen.

4. Nachrüstbausatz nach einem der vorhergehenden Ansprüche, **gekennzeichnet durch** ein Steuerungsmittel, das ausgebildet ist, den Betrieb eines Heizkessel zu unterbrechen und/oder ein Warnsignal auszugeben, wenn die Abgastemperatur und/oder der Druck am Anschlussstutzen von einem vorbestimmten Sollwertbereich abweicht bzw. abweichen.

5. Nachrüstbausatz nach einem der vorhergehenden Ansprüche, **dadurch gekennzeichnet, dass** das Gebläse im Einbauzustand des Wärmetauschers oberhalb einer Kondensatsammeleinheit angeordnet ist.

6. Nachrüstbausatz nach einem der vorhergehenden Ansprüche, **dadurch gekennzeichnet, dass** der Abgasstutzen im Einbauzustand des Wärmetauschers derart angeordnet ist, dass
- ein erster Abschnitt des Abgasstutzens in Höhe des unteren Drittels des Wärmetauschers und im wesentlichen horizontal angeordnet ist,
- ein zweiter Abschnitt des Abgasstutzens in Höhe des oberen Drittels des Wärmetauschers und im wesentlichen horizontal angeordnet ist, und
- ein dritter Abschnitt des Abgasstutzens zwischen dem ersten und dem zweiten Abschnitt und im wesentlichen vertikal angeordnet ist,
- wobei das Gebläse vorzugsweise zwischen dem zweiten und dem dritten Abschnitt des Abgasstutzens angeordnet ist.

7. Nachrüstbausatz nach einem der vorhergehenden Ansprüche, **dadurch gekennzeichnet, dass** zumindest ein Abschnitt des Abgasstutzens in mehreren verschiedenen, zueinander um eine vertikale Achse verschwenkten Positionen montierbar ist.

8. Nachrüstbausatz nach einem der vorhergehenden Ansprüche, **gekennzeichnet durch** einen Steckverbinder zum Anschluss des Wärmetauschers an einen Heizkessel, wobei der Steckverbinder aufweist
- einen ersten Steckanschluss zum Anschluss des Steckverbinders an eine Heizkesselsteuerung,
- einen zweiten Steckanschluss zum Anschluss des Steckverbinders an einen Brenner und
- einen dritten Steckanschluss zum Anschluss des Steckverbinders an den Wärmetauscher.

9. Nachrüstbausatz nach dem vorhergehenden Anspruch,
**dadurch gekennzeichnet, dass** der Steckverbinder ausgebildet ist, den Betrieb eines Heizkessels, insbesondere eines Brenners, zu unterbrechen und/oder ein Warnsignal auszugeben, wenn die Abgastemperatur und/oder der Druck am Anschlussstutzen des Wärmetauschers von einem vorbestimmten Sollwertbereich abweicht bzw. abweichen.

10. Nachrüstbausatz nach einem der beiden vorhergehenden Ansprüche,
**dadurch gekennzeichnet, dass** der dritte Steckanschluss zwischen dem ersten und dem zweiten Steckanschluss angeordnet ist und der erste und zweite Steckanschluss jeweils eine Pinbelegung aufweisen, die einer Pinbelegung einer Steckverbindung zwischen einem Brenner und einer Heizkesselsteuerung entspricht.

11. Wärmetauscher zum Nachrüsten für einen Heizkessel zur Gebäudeheizung, umfassend
- einen Anschlussstutzen zum Anschließen des Wärmetauschers an einen Heizkesselabgasausgang und
- einen Abgasstutzen zum Anschließen des Wärmetauschers an eine Abgasleitung,
**dadurch gekennzeichnet, dass** der Abgasstutzen ein Gebläse aufweist.

12. Steckverbinder zum Anschluss eines Nachrüstbausatzes nach einem der Ansprüche 1-10 und/oder eines Wärmetauschers nach dem vorhergehenden Anspruch 11 an einen Heizkessel zur Gebäudeheizung, **dadurch gekennzeichnet, dass** der Steckverbinder aufweist:
- einen ersten Steckanschluss zum Anschluss des Steckverbinders an eine Heizkesselsteuerung,
- einen zweiten Steckanschluss zum Anschluss des Steckverbinders an einen Brenner und
- einen dritten Steckanschluss zum Anschluss des Steckverbinders an den Wärmetauscher.

13. Verwendung eines Wärmetauschers nach Anspruch 11 zum Nachrüsten eines Heizkessels zur Gebäudeheizung.

14. Verwendung eines Steckverbinders nach Anspruch 12 zum Anschluss eines Nachrüstbausatzes nach einem der Ansprüche 1-10 und/oder eines Wärmetauschers nach Anspruch 11 an einen Heizkessel zur Gebäudeheizung.

15. Verfahren zur Steigerung der Energieeffizienz eines Heizkessels zur Gebäudeheizung, umfassend die Schritte:
- Anschließen eines Wärmetauschers an einen Heizkesselabgasausgang,
- Anschließen des Wärmetauschers über einen Abgasstutzen an eine Abgasleitung,
**gekennzeichnet durch** den Schritt:
- Bereitstellen eines Gebläses im Abgasstutzen.
